**Europäisches Patentamt**

**European Patent Office**

**Office européen des brevets**

(11) Veröffentlichungsnummer: **0 234 015 B1**

(12) **EUROPÄISCHE PATENTSCHRIFT**

(45) Veröffentlichungstag der Patentschrift: **24.07.91**

(21) Anmeldenummer: **86116937.3**

(22) Anmeldetag: **05.12.86**

(51) Int. Cl.⁵: **B60T 13/38**

(54) **Druckmittelbetätigte Motorwagen-Bremsanlage.**

(30) Priorität: **29.01.86 DE 3602607**

(43) Veröffentlichungstag der Anmeldung:
**02.09.87 Patentblatt 87/36**

(45) Bekanntmachung des Hinweises auf die
Patenterteilung:
**24.07.91 Patentblatt 91/30**

(84) Benannte Vertragsstaaten:
**DE FR GB IT SE**

(56) Entgegenhaltungen:
**FR-A- 2 271 088**
**GB-A- 2 053 397**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Berger, Siegfried
Finkenweg 5
W-3255 Lauenau(DE)**
Erfinder: **Frhr. v. Stillfried, Rüdiger, Dipl.-Ing.
Weidenweg 23
W-3013 Barsinghausen 1(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

## Beschreibung

Die Erfindung betrifft eine druckmittelbetätigte Motorwagen-Bremsanlage nach dem Oberbegriff des Patentanspruchs 1.

Eine derartige Motorwagen-Bremsanlage ist aus der GB-A-20 53 397 bekannt. In der Druckmittelzuleitung zum Vorratsanschluß weist die bekannte Anlage in Gestalt eines Relaisventils (dort 15) eine druckgesteuerte Ventileinrichtung auf, deren Ausgang zum Vorratsanschluß bei fehlendem Steuerdruck druckentlastet ist. Der Steueranschluß dieser Ventileinrichtung ist mit einem Federspeichervorrat und damit zugleich mit dem Eingang eines Federspeicher-Bremsventils verbunden und deshalb stets mit dem Vorratsdruck der Federspeicherbremsanlage beaufschlagt, so daß diese Ventileinrichtung unabhängig von der Betätigung der Federspeicherbremsanlage ständig durchgängig ist. Die Federspeicherbremsanlage kann außer als Feststellbremsanlage als Hilfsbremsanlage dienen. Zur Betätigung der Federspeicherbremsanlage ist das Federspeicher-Bremsventil vorgesehen, bei dessen Betätigung die Lösekammer des wenigstens einen Federspeicherbremszylinders der Federspeicherbremsanlage druckentlastet wird, woraufhin eine Speicherfeder die Kraft zur Bremsung erzeugt. Über den Vorratsanschluß der bekannten Anlage wird die Bremsanlage eines von dem Motorwagen gezogenen Anhängers mit Druckmittel, welches auf Vorratsdruck vorgespannt ist, versorgt. Betätigt wird die Anhänger-Bremsanlage über den Bremsanschluß der bekannten Anlage bei Betätigung von deren Federspeicherbremsanlage oder einer von deren - soweit vorhanden - anderen Bremsanlagen. Bei dieser Betätigung bleibt der am Vorratsanschluß anstehende Druck im wesentlichen unbeeinflußt.

Nun gibt es Einsatzfälle, in denen bei Betätigung der Feststellbremsanlage des Motorwagens eine Druckentlastung des Vorratsanschlusses möglich sein muß.

Der Erfindung liegt daher die Aufgabe zugrunde, eine druckmittelbetätigte Motorwagen-Bremsanlage der eingangs genannten Art mit einfachen Mitteln so zu verbessern, daß bei Betätigung ihrer Feststellbremsanlage der Vorratsanschluß druckentlastbar ist.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Bei einer Anhänger-Bremsanlage, die eine wenigstens als Feststellbremsanlage wirkende Federspeicherbremsanlage aufweist, ermöglicht die Erfindung deren Mitbetätigung bei Betätigung der Feststellbremsanlage des Motorwagens.

Als erfindungsgemäß in der Druckmittelzuführung zum Vorratsanschluß vorgesehene Ventileinrichtung kann jede in geeigneter Weise wirkende bekannte Ventileinrichtung verwendet werden. Besonders kostengünstig ist ihre Ausbildung als Relaisventil oder druckgesteuertes 3/2-Wegeventil.

Die Erfindung läßt sich realisieren sowohl, wenn das Federspeicher-Bremsventil in der Druckmittelzuleitung zu der genannten Lösekammer, als auch, wenn das Federspeicher-Bremsventil in der Steuerleitung eines Relaisventils in der Druckmittelzuleitung zu der genannten Lösekammer angeordnet ist. Da der Druck in der Lösekammer mit dem Steuerdruck des erwähnten Relaisventils im wesentlichen identisch ist, gelten alle nachstehend für den "Druck in der Lösekammer" oder sinngleiche Sachverhalte gemachten Ausführungen für beide Alternativen in identischer Weise.

In einer Ausgestaltung ist in der Steuerleitung der genannten Ventileinrichtung eine zusätzliche Ventileinrichtung nach dem Patentanspruch 4 angeordnet. Diese Ausgestaltung ermöglicht, wenn das Federspeicher-Bremsventil in Feststellbremsstellung ist, alternativ eine Druckentlastung des Steueranschlusses der Ventileinrichtung und damit eine Druckentlastung des Vorratsanschlusses mit der Folge einer Mitbremsung der Anhänger-Feststellbremsanlage oder eine Druckbeaufschlagung des Steueranschlusses der genannten Ventileinrichtung mit Vorratsdruck und damit die (Fortsetzung der) Druckmittelversorgung der Anhänger-Bremsanlage mit der Folge sich lösender bzw. nicht mitwirkender Anhänger-Feststellbremsanlage.

Die zusätzliche Ventileinrichtung kann so ausgebildet sein, daß sie unabhängig von dem Federspeicher-Bremsventil automatisch in Feststellbremsstellung (Grundstellung) geht, wobei sie zur Umstellung in die Füllstellung einen äußeren Eingriff voraussetzt. Diese Aussage gilt auch, wenn das Federspeicher-Bremsventil weitere Stellungen aufweisen sollte (siehe weiter unten). Im letztgenannten Fall können aber beide genannten Ventileinrichtungen so verknüpft sein, daß die zusätzliche Ventileinrichtung nur dann in Füllstellung stellbar und/oder haltbar ist, wenn das Federspeicher-Bremsventil in Feststellbremsstellung steht.

Diese Ausgestaltung bietet den Vorteil, daß ohne den erwähnten äußeren Eingriff unbeschadet etwaiger weiterer Funktionen des Federspeicher-Bremsventils (siehe weiter unten) bei Betätigung der Feststellbremsanlage des Motorwagens die Feststellbremsanlage des Anhängers selbsttätig mitbetätigt wird.

In einer Weiterbildung der zuletzt erwähnten Ausgestaltung wird sichergestellt, daß auch in Füllstellung der zusätzlichen Ventileinrichtung der Anhänger gebremst bleibt, und zwar unter Zuhilfenahme seiner Betriebsbremsanlage. In dieser Ausgestaltung ist in einer Druckmittelzuführung zum Bremsanschluß ein invertierendes Relaisventil angeordnet, dessen Steueranschluß über eine Steuerleitung mit der zusätzlichen Ventileinrichtung in Verbindung steht und von dieser in ihrer Feststellbremsstellung mit Vorratsdruck beaufschlagt und in ihrer Füllstellung druckentlastet wird. Auf diese Weise bewirkt die zusätzliche Ventileinrichtung in ihrer Füllstellung eine Beaufschlagung des Bremsanschlusses mit Vorratsdruck und damit eine Betätigung der Anhänger-Betriebsbremsanlage.

In allen erwähnten Ausgestaltungen kann die zusätzliche Ventileinrichtung mit dem Federspeicher-Bremsventil vereinigt, d. h. mit diesem zusammengebaut und/oder in dieses funktionell integriert sein, wobei dieses in seiner Feststellbremsstellung auch die Funktion der Feststellbremsstellung (Grundstellung) der zusätzlichen Ventileinrichtung übernehmen kann und außerdem deren Füllstellung mit der oder den zugeordneten Funktionen übernehmen kann. Diese Ausgestaltung ist kostengünstig und hat den Vorteil, daß die bereits erwähnte Verknüpfung beider mit einfachen Mitteln ausführbar ist. In einer zweckmäßigen Ausbildung dieser Ausführungsform ist das Federspeicher-Bremsventil derart ausgebildet und angeordnet, daß es in seiner Feststellbremsstellung sowohl die Lösekammer des Federspeicherbremszylinders als auch den Steueranschluß der Ventileinrichtung druckentlastet und in seiner Füllstellung die Druckentlastung der Lösekammer des Federspeicherbremszylinders aufrechterhält, den Steueranschluß der Ventileinrichtung jedoch mit Vorratsdruck beaufschlagt. Ist in diesem Falle in einer Druckmittelzuleitung zum Bremsanschluß das bereits erwähnte invertierende Relaisventil vorgesehen, kann, insbesondere in kostengünstiger Weise, das Federspeicherbremsventil derart ausgebildet und angeordnet sein, daß es auch die auf das letztere bezüglichen Funktionen übernimmt. In diesem Falle ist das Federspeicher-Bremsventil derart ausgebildet und angeordnet, daß es in seiner Feststellbremsstellung die Steuerleitung des invertierenden Relaisventils mit Vorratsdruck beaufschlagt und in seiner Füllstellung diese Steuerleitung druckentlastet.

Wie oben schon angedeutet, kann das Federspeicher-Bremsventil in jeder der genannten Ausgestaltungen weitere Stellungen mit entsprechenden Funktionen aufweisen. So kann es eine Fahrstellung aufweisen und so angeordnet sein, daß es in dieser Fahrstellung die Lösekammer des Federspeicherbremszylinders und den Steueranschluß der Ventileinrichtung mit Vorratsdruck beaufschlagt. Dadurch erübrigen sich weitere Einrichtungrn zur Sicherstellung des lösens der Motorwagen- und Anhänger-Bremsanlage im Fahrbetrieb.

In jeder der vorstehend genannten Ausführungsformen der Erfindung kann das Federspeicher-Bremsventil auch als Hilfsbremsventil ausgebildet sein. In diesem Falle weist es einen Einstellbereich, nachstehend Hilfsbremsbereich, auf, in welchem es abhängig von der Stellung seines Stellglieds und/oder von der darauf ausgeübten Stellkraft die Lösekammer des Federspeicherbremszylinders abstufbar druckbeaufschlagt bzw. druckentlastet unter gleichzeitiger Beaufschlagung des Steueranschlusses der Ventileinrichtung mit (vollem) Vorratsdruck mit der Folge, daß die Versorgung der Anhänger-Bremsanlage mit Druckmittel in dem Hilfsbremsbereich nicht beeinflußt wird.

In dem bereits erwähnten Fall, daß in einer Druckmittelzuführung zum Bremsanschluß das invertierende Relaisventil angeordnet ist, kann das Federspeicher-Bremsventil im Hilfsbremsbereich dessen Steuerleitung mit dem Druck der Lösekammer des Federspeicherbremszylinders beaufschlagen mit dem Ergebnis, daß zugleich mit der in diesem Falle abgestuft wirkenden Federspeicherbremsanlage des Motorwagens auch die Betriebsbremsanlage des Anhängers abgestuft eingesetzt wird.

Es ist bemerkenswert, daß die Erfindung alle erwähnten möglichen Wirkungen auf die Anhänger-Bremsanlage ohne jegliche Veränderungen an derselben entfaltet, vorausgesetzt, daß diese mit über den Vorratsanschluß gesteuerter Federspeicherbremsanlage ausgerüstet ist.

Die Erfindung wird nachstehend anhand von Ausführungsbeispielen beschrieben.

Es zeigen:

Fig. 1 die druckmittelbetätigte Bremsanlage eines aus Motorwagen und Anhänger bestehenden Fahrzeugzugs,

Fig. 2 ausschnittsweise eine andere Ausgestaltung der Anlage nach Fig. 1.

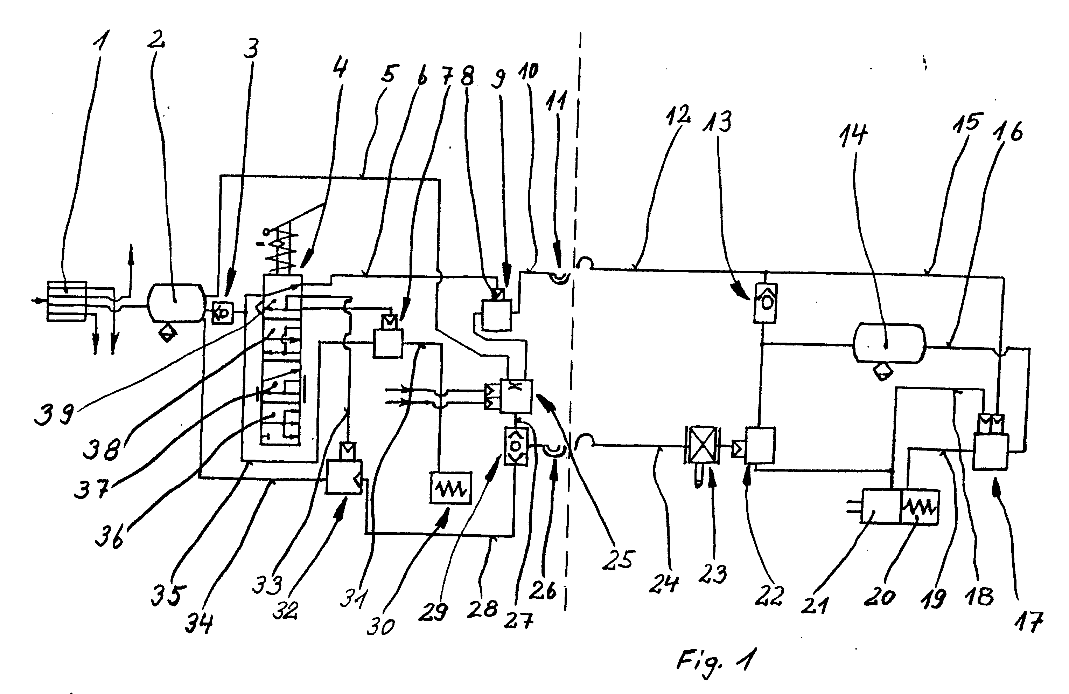

Die in Fig. 1 dargestellte Fahrzeug-Bremsanlage zeigt, vom Betrachter aus gesehen, links der gestrichelten senkrechten Linie eine Motorwagen-Bremsanlage und rechts derselben eine Anhänger-Bremsanlage.

Die Motorwagen-Bremsanlage weist einen Vorratsanschluß (11) und einen Bremsanschluß (26) zur Versorgung bzw. Steuerung der Anhänger-Bremsanlage auf. Zeichnerisch sind beide Anschlüsse durch jeweils einen Kupplungskopf symbolisiert. Die Motorwagen-Bremsanlage enthält des weiteren eine Federspeicher-Bremsanlage, die einen Federspeicherbremszylinder (30) aufweist. Es ist offenkundig, daß anstelle des einen Federspeicherbremszylinders (30) auch eine Vielzahl von Federspeicherbremszylindern stehen kann, ohne daß die nachstehenden Ausführungen dadurch berührt würden.

Der Federspeicherbremszylinder weist in bekannter und nicht näher dargestellter Weise eine Lösekammer auf, die über eine Druckmittelzuführung (31, 35) mit Druckmittel aus einem Federspeichervorrat (2) beaufschlagbar ist. In der Druckmittelzuleitung (31, 35) ist ein Relaisventil (7) angeordnet, welches in die Lösekammer einen im wesentlichen dem ihm zugeführten Steuerdruck gleichen Druck liefert. Das Relaisventil (7) ist steuerseitig mit einem Federspeicher-Bremsventil (4) verbunden. Das Relaisventil (7) dient in bekannter Weise zur Beschleunigung des Druckaufbaus bzw. -abbaus in der Lösekammer und kann in ebenfalls bekannter Weise bei entsprechender Auslegung der Motorwagen-Bremsanlage auch entfallen. In diesem Fall wäre die Druckmittelzuleitung zur Lösekammer unter Entfall des Leitungsteils (35) anstelle der Steuerleitung des Relaisventils (7) mit dem Federspeicher-Bremsventil (4) verbunden.

Die Federspeicher-Bremsanlage dient als Feststellbremsanlage und, bei entsprechender Betätigungsmöglichkeit, als abstufbare Hilfsbremsanlage.

Aus den vorstehenden Anmerkungen geht hervor, daß, wenn nachstehend der "Druck in der Lösekammer" oder ein sinngleicher Sachverhalt erwähnt wird, mit gleicher Wirkung an dessen Stelle auch der Steuerdruck des Relaisventils (7) gemeint sein kann.

Das Federspeicherbremsventil (4) weist eine Feststellbresmstellung (38) auf, in welcher es die (völlige) Druckentlastung der Lösekammer des Federspeicherbremszylinders (30) und damit das volle Ansprechen der Federspeicherbremsanlage zum Zwecke der Feststellbremsung bewirkt.

Der Vorratsanschluß (11) ist über eine Druckmittelzuleitung (5, 10) mit Druckmitttel aus dem Federspeichervorrat (2) beaufschlagbar. In der Druckmittelzuleitung (5, 10) ist eine steuerbare Ventileinrichtung (9) angeordnet, deren Steueranschluß (8) über eine Steuerleitung (6) mit dem Federspeicherbremsventil (4) verbunden ist. Die Ventileinrichtung (9) ist derart ausgebildet, daß sie bei Druckbeaufschlagung ihres Steueranschlusses (8) durchgängig und bei Druckentlastung ihres Steueranschlusses (8) gesperrt ist und den stromabwärts von ihr gelegenen Teil (10) der Druckmittelzuleitung (5, 10) und damit den Vorratsanschluß (11) druckentlastet. Dargestellt ist die Ventileinrichtung (9) als Relaisventil; sie kann aber auf jede andere geeignete Weise aufgebaut sein, beispielsweise als 3/2-Wegeventil.

Das Federspeicher-Bremsventil (4) ist vorratsseitig mit dem Druck des Federspeichervorrats (2) beaufschlagt. Aus den vorstehenden Erläuterungen geht hervor, daß der Federspeichervorrat (2) einerseits zur Druckmittelversorgung des Vorratsanschlusses (11) und damit der Anhänger-Bremsanlage und andererseits zur Druckmittelversorgung der Federspeicherbremsanlage und des Federspeicher-Bremsventils (4) und mit letzterem der Steuerung der Ventileinrichtung (9) und der Federspeicherbremsanlage über das Relaisventil (7) dient. Der gemeinsame Versorgungskreis der Federspeicherbremsanlage und des Federspeicherbremsventils (4) ist gegenüber dem Versorungskreis der Anhänger-Bremsanlage durch ein in bekannter Weise aufgebautes und wirkendes Rückschlagventil (3) gesichert.

In nicht dargestellter Weise weist die Motorwagen-Bremsanlage eine Druckluftversorgungsanlage auf, aus welcher der Federspeichervorrat (2) über ein in bekannter Weise aufgebautes Schutzventil (1) mit Druckmittel versorgt wird. Über das Schutzventil (1) werden als weitere Bestandteile der Motorwagen-Bremsanlage eine Betriebsbremsanlage sowie eine oder mehrere weitere druckmittelbetätigte Verbraucheranlage(n) versorgt. Derartige Anlagen sind bekannt und werden deshalb hier nicht näher beschrieben.

Die Anhänger-Bremsanlage weist eine durch einen Betriebsbremszylinder (21) symbolisierte Betriebsbremsanlage und eine durch einen Federspeicherbremszylinder (20) symbolisierte Federspeicherbremsanlage auf, welch letztere in erster Linie als Feststellbremsanlage, aber auch als automatische Bremsanlage, dient. Dargestellt sind die genannten Bremszylinder als Kombination; sie können aber auch als Einzelgeräte ausgeführt sein. Versorgt werden beide Teile der Anhänger-Bremsanlage aus einem Anhängervorrat (14), welcher seinerseits durch eine Anhänger-Vorratsleitung (12) über den Vorratsanschluß (11) vom Motorwagen mit Druckmittel versorgt wird. Die erwähnte Druckmittelversorgung des Anhängervorrats (14) erfolgt über ein in bekannter Weise aufgebautes Rückschlagventil (13), welches beim Abkuppeln oder Abreißen der Anhänger-Vorratsleitung (12) vom Vorratsanschluß (11) bzw. bei einem auf andere Weise hervorgerufenen Druckverlust in der Anhängervorratsleitung (12) einen Druckverlust im Anhängervorrat (14) und u. U. in weiteren etwa gerade druckbeaufschlagten Komponenten der Anhänger-Bremsanlage verhindert. Die Betätigung der Betriebsbremsanlage des Anhängers erfolgt über eine mit dem Bremsanschluß (26) des Motorwagens verbundene Anhänger-Bremsleitung (24) und Steuergeräte, wie sie beispielsweise in der Darstellung durch ein Anhänger-Relaisventil (22) und einen lastabhängigen Bremskraftregler (23) symbolisiert sind.

Für die Funktion der Federspeicherbremsanlage des Anhängers gilt das beim Motorwagen Gesagte entsprechend. In der Druckmittelzuleitung (16, 19) vom Anhängervorrat (14) zur Lösekammer des Federspeicherbremszylinders (20) ist ein als Überlastschutzventil (17) ausgebildetes Relaisventil angeordnet, welches an seinem Hauptsteueranschluß über eine Steuerleitung (15) vom Druck in der Anhängersteuerleitung (12) stromaufwärts des Rückschlagventils (13) angesteuert wird. Über einen Nebensteueranschluß wird das Überlastschutzventil (17) durch eine Nebensteuerleitung (18) bei Druckbeaufschlagung des Betriebsbremszylinder (21) von der Betriebsbremsanlage derart mitgesteuert, daß eine gefährliche Aufstockung von Zuspannkräften aus Betriebsbremszylinder (21) und Federspeicherbremszylinder (20) in nachgeordneten Bremsteilen vermieden wird.

Die Federspeicherbremsanlage ist solange gelöst, wie der Druck in der Anhängervorratsleitung (12) und damit in der Steuerleitung (15) und damit über den Teil (19) der Druckmittelzuleitung in der Lösekammer des Federspeicherbremszylinders (20) dessen Lösedruck hat/übersteigt. Wirksam wird die Federspeicherbremsanlage des Anhängers, wenn der erwähnte Druck den ebenfalls erwähnten Lösedruck unterschreitet. Voll wirksam ist die Federspeicherbremsanlage, wenn die Anhängervorratsleitung (12) und damit alle weiteren in diesem Absatz erwähnten Anlagenteile völlig druckentlastet sind.

Wie aus der an die Internationale Norm ISO 1219 angelehnten Darstellung der Durchflußwege im Federspeicherbremsventil (4) hervorgeht, löst dieses in seiner Feststellbremsstellung (38) in den bisher erwähnten Bestandteilen der Zugfahrzeug-Bremsanlage folgende Wirkungen aus. Der Steueranschluß (8) der Ventileinrichtung (9) ist druckentlastet. Damit druckentlastet diese den Vorratsanschluß (11) und damit über die Anhänger-Vorratsleitung (12) sowie die Steuerleitung (15) und das Überlastschutzventil (17) die Lösekammer des Federspeicherbremszylinders (20). Gleichzeitig wird die Steuerleitung des Relaisventils (7) und damit über den Teil (31) der Druckmittelzuführung zur Lösekammer des Federspeicherbremszylinders (30) dessen Lösekammer druckentlastet. Im Ergebnis sind in Feststellbremsstellung des Federspeicher-Bremsventils (4) also sowohl die Federspeicherbremsanlage des Motorwagens als auch die Federspeicherbremsanlage des Anhängers voll betätigt. Für den Fall, daß, wie es in dieser Grundausführung möglich ist, das Federspeicher-Bremsventil nur die erwähnte Feststellbremsstellung (38) besitzt, ist in nicht dargestellter Weise wenigstens eine weitere Einrichtung erforderlich, die zur Herstellung der Fahrbereitschaft des Fahrzeugzuges ein Lösen der Federspeicherbremsanlagen ermöglicht.

Das Federspeicher-Bremsventil (4) weist auch eine Füllstellung (39) auf. Wie die Darstellung zeigt, sind auch in dieser Stellung der Steueranschluß des Relaisventils (7) und damit die Lösekammer des Federspeicherbremszylinders (30) druckentlastet, letzterer mithin voll wirksam. Der Steueranschluß (8) der Ventileinrichtung (9) ist in der genannten Füllstellung (39) hingegen mit dem Vorratsdruck beaufschlagt. War vor Stellung des Federspeicherbremsventils (4) in seine Füllstellung (39) der Druck in der Anhängervorratsleitung (12) und in der Lösekammer des Federspeicherbremszylinders (20) abgefallen, beispielsweise durch eine Feststellbremsung, so kann sich dieser Druck in Füllstellung des Federspeicher-Bremsventils (4) wieder bis zum Vorratsdruck (des Federspeichervorrats (2)) aufbauen. Es ist offenkundig, daß an diesem Druckaufbau auch der Anhängervorrat (14) teilnimmt, sofern auch er einem Druckabbau unterlegen war. Zusammengefaßt ermöglicht also das Federspeicher-Bremsventil (4) in seiner Füllstellung (39) ein Wiederauffüllen der Anhänger-Bremsanlage bei gleichzeitigem Lösen der Federspeicherbremsanlage des Anhängers, jedoch unter Aufrechterhaltung der Feststellbremswirkung des Motorwagens. Diese reicht im Normalfall aus, den gesamten Fahrzeugzug zu halten.

Über die vorstehend beschriebenen Einrichtungen hinaus enthält die Motorwagen-Bremsanlage noch Einrichtungen, die auch in Füllstellung des Federspeicher-Bremsventils (4) eine Mitbremsung des Anhängers bewirken. Diese Einrichtungen greifen an der Druckmittelzuleitung zum Bremsanschluß (26) an, die üblicherweise von einem Anhängersteuerventil im Motorwagen ausgeht, wie es in einer nur durch die Betriebsbremsanlage betätigbaren Ausführung mit dem Bezugszeichen (25) symbolisiert ist. Das Anhängersteuerventil (25) liegt in der Druckmittelzuleitung (5, 10) in Reihe mit der Ventileinrichtung (9) stromaufwärts derselben, um in bekannter Weise auch dessen Versorgung zu gewährleisten. Im Anhängersteuerventil (25) ist eine schaltbare Drossel angedeutet, die in ebenfalls bekannter Weise im Falle von Störungen an der Anhänger-Bremsleitung (24) eine Beschleunigung des Ansprechens der dann als automatische Bremsanlage wirkenden Federspeicherbremsanlage des Anhängers besorgt.

Im vorliegenden Ausführungsbeispiel ist der Bremsanschluß (26) nicht nur über die übliche vom Anhängersteuerventil (25) ausgehende Druckmittelzuführung (27) sondern, über ein Zweiwegeventil (29), auch über eine Druckmittelzuleitung (28, 34) mit Druck aus dem Federspeichervorrat (2) beaufschlagbar. Auch gegen diese Druckmittelzuleitung (28, 34) ist der Versorgungskreis der Federspeicherbremsanlage und des Ventils (4) durch das Rückschlagventil (3) gesichert. In der Druckmittelzuführung (28, 34) ist ein invertierendes Relaisventil (32) angeordnet, also ein Relaisventil, welches bei steigendem Steuerdruck einen abfallenden Druck liefert und umgekehrt. Gesteuert wird das invertierende Relaisventil (32) über eine mit dem Federspeicher-Bremsventil (4) verbundene Steuerleitung (33). Das Federspeicher-Bremsventil (4) weist, wie die Darstellung zeigt, auch Durchflußwege für die Steuerleitung (33) auf, und zwar derart, daß diese in seiner Feststellbremsstellung (38) mit Vorratsdruck (des Federspeichervorrats (2)) beaufschlagt und in seiner Füllstellung druckentlastet ist. Dadurch und aufgrund der druckumkehrenden Wirkungsweise des invertierenden Relaisventils (32) wird in Feststellbremsstellung des Federspeicher-Bremsventils (4) der Bremsanschluß (26) über den Teil (28) der Druckmittelzuleitung (28, 34) druckentlastet gehalten. Einer Druckbeaufschlagung des Bremsanschlusses (26) durch Betätigung der Betriebsbremsanlage des Motorwagens über die übliche Druckmittelzuführung (27) steht hierbei jedoch nichts im Wege. In der Füllstellung des Federspeicher-Bremsventils (4) ist hingegen der Bremsanschluß (26) über die Druckmittelzuführung (28, 34) mit dem Vorratsdruck (des Federspeichervorrats (2)) beaufschlagt, mit dem Ergebnis, daß über die Anhänger-Bremsleitung (24) und die Steuergeräte (22, 23) der Betriebsbremszylinder (21) mit dem vollen im Anhängervorrat (14) vorhandenen Druck oder gegebenenfalls mit einem durch die Steuergeräte (22, 23) bestimmten Höchstdruck betätigt wird. Durch das invertierende Relaisventil (32) sowie die zugeordneten Leitungen und das Zweiwegeventil (29) wird also bewirkt, daß in Füllstellung (39) des Federspeicher-Bremsventils (4) zusätzlich zur Federspeicherbremsanlage des Motorwagens die Betriebsbremsanlage des Anhängers je nach Vorgabe durch die Steuergeräte (22, 23) bzw. Druckniveau im Anhängervorrat (14) wirksam ist. Infolge der Wirkung des Überlastschutzventils (17) wird entsprechend der von der Betriebsbremsanlage erzeugten Bremskraft diejenige der Federspeicherbremsanlage durch Nachspeisung von Druckmittel aus dem Anhängervorrat (14) in die Lösekammer des Federspeicherbremszylinders (20) reduziert. Führt nun eine Druckzunahme in der Anhänger-Vorratsleitung (12) und, entsprechend der Vorgabe durch die Steuergeräte (22, 23) sowie der Wirkung des Überlastschutzventils (17), in den nachgeordneten Bestandteilen bis zur Lösekammer des Federspeicherbremszylinders (20) zum immer weiter gehenden Lösen desselben, so bleibt der Fahrzeugzug unbeeinflußt davon mit der Feststellbremsanlage des Motorwagens und der Betriebsbremsanlage des Anhängers gebremst. Auch in der zuletzt beschriebenen Ausgestaltung der Erfindung ist wenigstens eine weitere Einrichtung zur Herstellung der Fahrbereitschaft des Fahrzeugzuges erforderlich. Eine derartige weitere Einrichtung wird dadurch überflüssig, daß das Federspeicher-Bremsventil (4) auch eine Fahrstellung (36) enthält. Wie die Darstellung zeigt, sind in dieser Fahrstellung (36) sowohl der Steueranschluß (8) der Ventileinrichtung (9) als auch der Steueranschluß des Relaisventils (7) mit dem Vorratsdruck (des Federspeichervorrats 2)) beaufschlagt. Als Ergebnis sind auch der Vorratsanschluß (11) und die Lösekammer des Federspeicherbremszylinders (30) mit diesem Vorratsdruck beaufschlagt, ferner die Anhänger-Bremsanlage aufgefüllt und die Feststellbremsanlage beider Teile des Fahrzeugs gelöst. Ist das invertierende Relaisventil (32) einschließlich seiner oben erwähnten Folgeeinrichtungen vorhanden, so ist in der erwähnten Fahrstellung (36) auch dessen Steuerleitung (33) mit dem Vorratsdruck beaufschlagt und der Bremsanschluß (26) druckentlastet und damit die Betriebsbremsanlage des Anhängers über des Federspeicher-Bremsventil (4) nicht betätigt.

Eine Motorwagen-Bremsanlage, die mit einem Federspeicher-Bremsventil in einer der bisher erwähnten Ausbildungen ausgerüstet ist, bedarf wenigstens einer weiteren Einrichtung, wenn die Federspeicherbremsanlage auch als Hilfsbremsanlage mit abgestufter Wirkung eingesetzt werden soll. Eine derartige zusätzliche Einrichtung ist überflüssig, wenn das Federspeicherbremsventil (4), wie dargestellt, auch noch einen Einstellbereich, nachstehend Hilfsbremsbereich (37) genannt, aufweist, in welchem die Lösekammer des Federspeicherbremszylinders (20) abstufbar druckbeaufschlagbar bzw. druckentlastbar ist. Wie die Darstellung zeigt, ist in dem Hilfsbremsbereich (37) der Steueranschluß (8) der Ventileinrichtung (9) und damit auch der Vorratsanschluß (11) und die Anhänger-Bremsanlage mit dem Vorratsdruck (des Federspeichervorrats 2)) beaufschlagt. Soll im Hilfsbremsbereich auch die Anhänger-Bremsanlage mitbetätigt werden, so wird dies, wie dargestellt, dadurch sichergestellt, daß mit der Steuerleitung des Relaisventils (7) und damit mit der Lösekammer des Federspeicherbremszylinders (30) zugleich die Steuerleitung (33) des invertierenden Relaisventils (32) abstufbar druckbeaufschlagt bzw. druckentlastet wird. Die genannte Druckbeaufschlagung der Steuerleitung (33) hat, wie aus der Wirkungsweise des invertierenden Relaisventils (32) folgt, eine im wesentlichen umgekehrt proportionale Druckveränderung am Bremsanschluß (26) und damit eine abgestufte Betätigung der Betriebsbremsanlage des Anhängers zur Folge. Im Hilfsbremsbereich (37) des Federspeicher-Bremsventils (4) sind also die Federspeicherbremsanlage des Motorwagens und die Betriebsbremsanlage des Anhängers wirksam.

Es liegt auf der Hand, daß alle vorstehend beschriebenen Wirkungen auch beim Fehlen des Federspeichervorrats (2) möglich sind. eine Motorwagen-Bremsanlage ohne Federspeichervorrat ist in den Einsatzfällen üblich, in denen die durch den genannten Entfall verursachten Nachteile, insbesondere verschlechtertes Zeitverhalten, in Kauf genommen oder anderweitig kompensiert werden können. Unter den gleichen Voraussetzungen sind auch Anhänger-Bremsanlagen üblich, in denen das Rückschlagventil (13) und das Überlastschutzventil (17) bzw. ein an dessen Stelle eingesetztes Relaisventil fehlen.

Im vorstehend beschriebenen Ausführungsbeispiel sind ein Federspeicher-Bremsventil und eine zusätzliche Ventileinrichtung in der Steuerleitung (6) zusammengebaut und funktionell integriert.

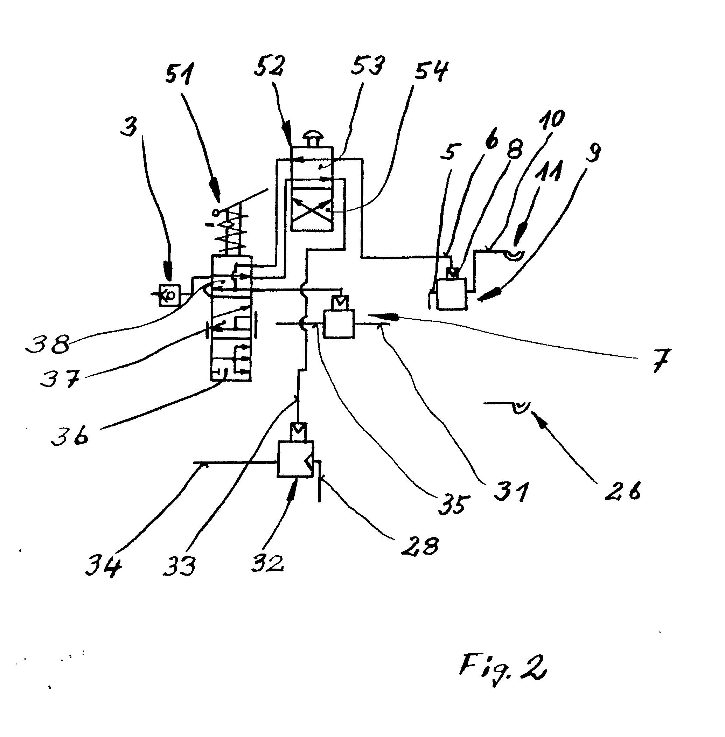

Fig. 2 zeigt eine Ausgestaltung der Erfindung, in der in der Steuerleitung (6) der Ventileinrichtung (9) eine zusätzliche Ventileinrichtung (52) angeordnet ist, die in eine Feststellbremsstellung (53) (Grundstellung) und in eine Füllstellung (54) stellbar ist. Das hier mit (51) bezeichnete Federspeicher-Bremsventil entbehrt der Füllstellung. Im übrigen stellt Fig. 2 einen Ausschnitt aus Fig. 1 dar, weshalb die diesbezüglich gemachten Ausführungen für das vorliegende Ausführungsbeispiel entsprechend gelten.

Befinden sich das Federspeicher-Bremsventil (51) und die zusätzliche Ventileinrichtung (52) in ihren Feststellbremsstellungen (38 bzw. 53), so verbindet die zusätzliche Ventileinrichtung (52) die Steuerleitung (6) der Ventileinrichtung (9) mit einem druckentlasteten Anschluß des Federspeicher-Bremsventils (51) mit der Folge, daß auch der Vorratsanschluß (11) druckentlastet wird. Befindet sich hingegen bei unveränderter Stellung des Federspeicher-Bremsventils (51) die zusätzliche Ventileinrichtung (52) in ihrer Füllstellung (54), so verbindet sie die Steuerleitung (6) der Ventileinrichtung (9) mit einem mit dem Vorratsdruck (des Federspeichervorrats (2)) beaufschlagten Anschluß des Federspeicher-Bremsventils (51) mit der Folge, daß der Vorratsanschluß (11) ebenfalls mit dem genannten Vorratsdruck beaufschlagt wird. Ist das Federspeicher-Bremsventil (51) in Feststellbremsstellung (38), so bestimmt also die zusätzliche Ventileinrichtung (52), je nach ihrer Stellung, ob der Vorratsanschluß (11) im Feststellbremsmodus oder im Füllmodus betrieben wird.

Befindet sich das Federspeicher-Bremsventil (51) in Feststellbremsstellung, so steuert die zusätzliche Ventileinrichtung (52) auch das invertierende Relaisventil (32), sofern dieses einschließlich seiner oben beschriebenen Folgeeinrichtungen vorhanden ist. In diesem Falle verbindet die zusätzliche Ventileinrichtung (52) in ihrer Feststellbremsstellung die Steuerleitung (33) des invertierenden Relaisventils (32) mit einem mit dem Vorratsdruck (des Federspeichervorrats 2)) beaufschlagten Anschluß des Federspeicher-Bremsventils (51) und in ihrer Füllstellung (54) mit einem druckentlasteten Anschluß des Federspeicher-Bremsventils (51). Dadurch werden am Bremsanschluß (26) und damit in der Anhänger-Bremsanlage die im vorigen Ausführungsrungsbeispiel für die Feststellbremsstellung bzw. die Füllstellung des Federspeicher-Bremsventils (4) beschriebenen Wirkungen des invertierenden Relaisventils (32) auslöst.

Zur Realisierung der beim vorigen Ausführungsbeispiel genannten entsprechenden Vorteile weist auch das Federspeicher-Bremsventil (51) die Fahrstellung (36) und den Hilfsbremsbereich (37) auf. In nicht näher dargestellter Weise kann die zusätzliche Ventileinrichtung (52) so mit dem Federspeicher-Bremsventil (51) verknüpft sein, daß sie durch äußere Einwirkung nur dann in die Füllstellung (54) stellbar ist, wenn das Federspeicher-Bremsventil (51) in der Feststellbremsstellung (38) steht. Hinsichtlich ihrer Feststellbremsstellung (53) (Grundstellung) kann die zusätzliche Ventileinrichtung (52) so ausgebildet sein, daß sie bei Entfall der äußeren Einwirkung in allen etwaigen Stellungen des Federspeicher-Bremsventils (51) automatisch diese Feststellbremsstellung (53) (Grundstellung) annimmt.

In nicht dargestellter Weise kann die zusätzliche Ventileinrichtung mit dem Federspeicher-Bremsventil vereinigt sein, beispielsweise durch Anflanschen.

Es liegt auf der Hand, daß über die vorstehend beschriebenen Ausbildungen hinaus die Erfindung auch alle weiteren die Merkmale der Patentansprüche aufweisenden Ausgestaltungen umfaßt.

**Patentansprüche**

1. Druckmittelbetätigte Motorwagen-Bremsanlage mit einem Vorratsanschluß (11) und einem Bremsanschluß (26) zur Versorgung bzw. Steuerung einer Anhänger-Bremsanlage, mit einer wenigstens als Feststellbremsanlage wirkenden Federspeicherbremsanlage, die wenigstens einen Federspeicherbremszylinder (130) aufweist und beim Stellen eines Federspeicher-Bremsventils (4, 51) in eine Feststellbremsstellung (38) durch Druckentlastung einer Lösekammer des Federspeicherbremszylinders (30) betätigt wird, wobei in der Druckmittelzuleitung (5, 10) zum Vorratsanschluß (11) eine druckgesteuerte Ventileinrichtung (9) angeordnet ist, deren Ausgang zum Vorratsanschluß (11) bei fehlendem Steuerdruck druckentlastet ist, dadurch gekennzeichnet, daß der Steueranschluß (8) der wenigstens vom Druck in der Lösekammer oder von einem dem Druck in der Lösekammer entsprechenden Druck steuerbaren Ventileinrichtung (9) mit wenigstens einem Ausgang des Federspeicher-Bremsventils (4, 51) verbunden und in dessen Feststellbremsstellung (38) druckentlastet ist.

2. Druckmittelbetätigte Motorwagen-Bremsanlage nach Anspruch 1, dadurch gekennzeichnet, daß die Ventileinrichtung (9) als Relaisventil ausgebildet ist.

3. Druckmittelbetätigte Motorwagen-Bremsanlage nach Anspruch 1, dadurch gekennzeichnet, daß die Ventileinrichtung (9) als druckgesteuertes 3/2-Wegeventil ausgebildet ist.

4. Druckmittelbetätigte Motorwagen-Bremsanlage nach einem der Ansprüche 1 bis 3, dadurch gekennzeichnet, daß
   a) in der Verbindung zwischen dem Steueranschluß (8) der Ventileinrichtung (9) und dem Federspeicher-Bremsventil (51) eine zusätzliche Ventileinrichtung (52) angeordnet ist, die in eine Feststellbremsstellung (53) und in eine Füllstellung (54) stellbar ist;
   b) die zusätzliche Ventileinrichtung (52) derart ausgebildet und angeordnet ist, daß sie bei druckentlasteter Lösekammer des Federspeicherbremszylinders (30) in ihrer Feststellbremsstellung (53) den Steueranschluß (8) der Ventileinrichtung (9) druckentlastet und in ihrer Füllstellung (54) diesen Steueranschluß (8) mit Vorratsdruck beaufschlagt.

5. Druckmittelbetätigte Motorwagen-Bremsanlage nach Anspruch 4, dadurch gekennzeichnet, daß die zusätzliche Ventileinrichtung mit dem Federspeicher-Bremsventil vereinigt ist.

6. Druckmittelbetätigte Motorwagen-Bremsanlage nach Anspruch 4, dadurch gekennzeichnet, daß die zusätzliche Ventileinrichtung (52) derart ausgebildet und angeordnet ist, daß sie in ihrer Feststellbremsstellung (53) die Steuerleitung (33) eines in einer Druckmittelzuleitung (28, 34) zum Bremsanschluß (26) angeordneten invertierenden Relaisventils (32) mit Vorratsdruck beaufschlagt und in ihrer Füllstellung (54) diese Steuerleitung (33) druckentlastet.

7. Druckmittelbetätigte Motorwagen-Bremsanlage nach Anspruch 6, dadurch gekennzeichnet, daß die zusätzliche Ventileinrichtung mit dem Federspeicher-Bremsventil vereinigt ist.

8. Druckmittelbetätigte Motorwagen-Bremsanlage nach einem der Ansprüche 5 oder 7, dadurch gekennzeichnet, daß das Federspeicher-Bremsventil (4) derart ausgebildet und angeordnet ist, daß es in einer Füllstellung (39) die Lösekammer des Federspeicher-Bremszylinders (30) druckentlastet und den Steueranschluß (8) der Ventileinrichtung (9) mit Vorratsdruck beaufschlagt.

9. Druckmittelbetätigte Motorwagen-Bremsanlage nach Anspruch 7, dadurch gekennzeichnet, daß das Federspeicher-Bremsventil (4) derart ausgebildet und angeordnet ist, daß es in seiner Feststellbremsstellung (38) die Steuerleitung (33) des invertierenden Relaisventils (32) mit Vorratsdruck beaufschlagt und in seiner Füllstellung (39) diese Steuerleitung (33) druckentlastet.

10. Druckmittelbetätigte Motorwagen-Bremsanlage nach einem der vorhergehenden Ansprüche, dadurch gekennzeichnet, daß das Federspeicher-Bremsventil (4, 51) eine Fahrstellung (36) aufweist und so angeordnet ist, daß es in dieser Fahrstellung (36) die Lösekammer des Federspeicher-Bremszylinders (30) und den Steueranschluß (8) der Ventileinrichtung (9) mit Vorratsdruck beaufschlagt.

11. Druckmittelbetätigte Motorwagen-Bremsanlage nach einem der vorhergehenden Ansprüche, dadurch gekennzeichnet, daß das Federspeicher-Bremsventil (4, 51) einen Einstellbereich, nachstehend Hilfsbremsbereich (37), aufweist, in welchem es die Lösekammer des Federspeicher-Bremszylinders (30) abstufbar druckbeaufschlagt bzw. druckentlastet unter gleichzeitiger Beaufschlagung des Steueranschlusses (8) der Ventileinrichtung (9) mit Vorratsdruck.

12. Druckmittelbetätigte Motorwagen-Bremsanlage nach Anspruch 10, dadurch gekennzeichnet, daß das Federspeicherbremsventil (4, 51) im Hilfsbremsbereich (37) die Steuerleitung (33) des invertierenden Relaisventils (32) mit dem Druck der Lösekammer des Federspeicherbremszylinders (30) beaufschlagt.

13. Druckmittelbetätigte Motorwagen-Bremsanlage nach einem der Ansprüche 4 bis 12, dadurch gekennzeichnet, daß die zusätzliche Ventileinrichtung (52) unabhängig von dem Federspeicher-Bremsventil (51) automatisch in ihre Feststellbremsstellung (53), auch Grundstellung genannt, geht und nur durch einen äußeren Eingriff in ihre Füllstellung (54) stellbar ist.

14. Druckmittelbetätigte Motorwagen-Bremsanlage nach einem der Ansprüche 4 bis 13, dadurch gekennzeichnet, daß die zusätzliche Ventileinrichtung (52) nur dann in Füllstellung (54) stellbar und/oder haltbar ist, wenn das Federspeicher-Bremsventil (51) in Feststellbremsstellung (38) steht.

## Claims

1. Pressure medium-actuated motor vehicle braking system with a feed port (11) and a brake port (26) for supply and control, respectively, of a trailer braking system, with a spring-loaded braking system acting at least as a parking brake system, which has at least one spring-loaded brake cylinder (30) and is actuated on setting a spring-loaded brake valve (4, 51) to a parking brake setting (38) by relieving a release chamber of the spring-loaded brake cylinder (30) of pressure, a pressure-controlled valve arrangement (9) being arranged in the pressure medium supply line (5, 10) to the feed port (11), the output of which valve arrangement to the feed port (11) is relieved of pressure when there is no control pressure, characterized in that the control port (8) of the valve arrangement (9) controllable at least by the pressure in the release chamber or by a pressure corresponding to the pressure in the release chamber is connected to at least one output of the spring-loaded brake valve (4, 51) and is relieved of pressure in the parking brake setting (38) thereof.

2. A pressure medium-actuated motor vehicle braking system according to claim 1, characterized in that the valve arrangement (9) is constructed as a relay valve.

3. A pressure medium-actuated motor vehicle braking system according to claim 1, characterized in that the valve arrangement (9) is constructed as a pressure-controlled 3/2-way valve.

4. A pressure medium-actuated motor vehicle braking system according to one of claims 1 to 3, characterized in that
    a) in the connection between the control port (8) of the valve arrangement (9) and the spring-loaded brake valve (51) there is arranged an additional valve arrangement (52) which can be set in a parking brake setting (53) and a full-release setting (54);
    b) the additional valve arrangement (52) is constructed and arranged so that, when the release chamber of the spring-loaded brake cylinder (30) is relieved of pressure, in its parking brake setting (53) the additional valve arrangement relieves the control port (8) of the valve arrangement (9) of pressure, and in its full-release setting (54) it charges this control port (8) with feed pressure.

5. A pressure medium-actuated motor vehicle braking system according to claim 4, characterized in that the additional valve arrangement is combined with the spring-loaded brake valve.

6. A pressure medium-actuated motor vehicle braking system according to claim 4, characterized in that the additional valve arrangement (52) is constructed and arranged so that in its parking brake position (53) it charges the control line (33) of an inverting relay valve (32) arranged in a pressure medium supply line (28, 34) to the brake port (26) with feed pressure, and in its full-release setting (54) it relieves this control line (33) of pressure.

7. A pressure medium-actuated motor vehicle braking system according to claim 6, characterized in that the additional valve arrangement is combined with the spring-loaded brake valve.

8. A pressure medium-actuated motor vehicle braking system according to one of claims 5 or 7, characterized in that the spring-loaded brake valve (4) is constructed and arranged so that in a full-release setting (39) it relieves the release chamber of the spring-loaded brake cylinder (30) of pressure and charges the control port (8) of the valve arrangement (9) with feed pressure.

9. A pressure medium-actuated motor vehicle braking system according to claim 7, characterized in that the spring-loaded brake valve (4) is constructed and arranged so that in its parking brake setting (38) it charges the control line (33) of the inverting relay valve (32) with feed pressure and in its full-release setting (39) it relieves this control line (33) of pressure.

10. A pressure medium-actuated motor vehicle braking system according to one of the preceding claims, characterized in that the spring-loaded brake valve (4, 51) has a drive setting (36) and is arranged so that in this drive setting (36) it charges the release chamber of the spring-loaded brake cylinder (30) and the control port (8) of the valve arrangement (9) with feed pressure.

11. A pressure medium-actuated motor vehicle braking system according to one of the preceding claims, characterized in that the spring-loaded brake valve (4, 51) has an adjustment range, hereinafter referred to as the auxiliary brake range (37), in which the release chamber of the spring-loaded brake cylinder (30) is gradually charged with pressure, or gradually relieved of pressure, with the control port (8) of the valve arrangement (9) being charged at the same time with feed pressure.

12. A pressure medium-actuated motor vehicle braking system according to claim 10, characterized in that, in the auxiliary brake range (37), the spring-loaded brake valve (4, 51) charges the control line (33) of the inverting relay valve (32) with the pressure of the release chamber of the spring-loaded brake cylinder (30).

13. A pressure medium-actuated motor vehicle braking system according to one of claims 4 to 12, characterized in that the additional valve arrangement (52), independently of the spring-loaded brake valve (51), enters its parking brake setting (53), also known as the basic setting, automatically, and is arranged to be set to its full-release setting (54) only by external intervention.

14. A pressure medium-actuated motor vehicle braking system according to one of claims 4 to 13, characterized in that the additional valve arrangement (52) is arranged to be set and/or held in its full-release setting (54) only when the spring-loaded brake valve (51) is in its parking brake setting (38).

**Revendications**

1. Système de freinage mû par un fluide de pression pour un véhicule tracteur, possédant un raccordement d'alimentation (11) et un raccordement de freinage (26) servant respectivement à l'alimentation et la commande d'un système de freinage de remorque, ainsi qu'un frein à ressort accumulateur, agissant au moins en tant que frein de stationnement, qui comprend au moins un cylindre de frein à ressort accumulateur (30) et est actionné par la détente d'une chambre de desserrage du cylindre de frein à ressort accumulateur (30) lorsqu'un robinet de frein à ressort accumulateur (4, 51) est amené à une position de freinage de stationnement (38), la conduite (5, 10) d'alimentation en fluide de pression menant au raccordement d'alimentation (11) contenant un appareil de distribution (9) piloté par pression, dont la sortie est détendue vers le raccordement d'alimentation (11) en cas d'absence de pression pilote,
caractérisé en ce que
le raccordement de pilotage (8) de l'appareil de distribution (9), appareil qui peut être piloté au moins par la pression dans la chambre de desserrage ou par une pression correspondant à la pression de la chambre de desserrage, est relié à au moins une sortie du robinet de frein à ressort accumulateur (4, 51) et est détendu à la position (38) de freinage de stationnement de ce robinet.

2. Système de freinage mû par un fluide de pression pour un véhicule tracteur selon la revendication 1, caractérisé en ce que l'appareil de distribution (9) est réalisé comme une soupape relais.

3. Système de freinage mû par un fluide de pression pour un véhicule tracteur selon la revendication 1, caractérisé en ce que l'appareil de distribution (9) est réalisé comme un distributeur à trois voies et deux positions, qui est piloté par pression.

4. Système de freinage mû par un fluide de pression pour un véhicule tracteur selon une des revendications 1 à 3, caractérisé en ce que
a) un appareil de distribution supplémentaire (52), pouvant être amené à une position (53) de freinage de stationnement et une position (54) de remplissage, est disposé dans la liaison entre le raccordement de pilotage (8) de l'appareil de distribution (9) et le robinet de frein à ressort accumulateur (51); et
b) l'appareil de distribution supplémentaire (52) est réalisé et disposé de manière que lorsque la chambre de desserrage du cylindre de frein à ressort accumulateur (30) est détendue, il produise la détente du raccordement de pilotage (8) de l'appareil de distribution (9) dans sa position (53) de freinage de stationnement, et qu'il applique la pression d'alimentation à ce raccordement de commande (8) dans sa position (54) de remplissage.

5. Système de freinage mû par un fluide de pression pour un véhicule tracteur selon la revendication 4, caractérisé en ce que l'appareil de distribution supplémentaire est réuni avec le robinet de frein à ressort accumulateur.

6. Système de freinage mû par un fluide de pression pour un véhicule tracteur selon la revendication 4, caractérisé en ce que l'appareil de distribution supplémentaire (52) est réalisé et disposé de manière qu'à sa position (53) de freinage de stationnement, il applique la pression d'alimentation à la conduite de pilotage (33) d'une soupape relais inverseuse (32) disposée dans une conduite (28, 34) d'amenée de fluide de pression au raccordement de freinage (26) et que, à sa position (54) de remplissage, il provoque la détente de cette conduite de pilotage (33).

7. Système de freinage mû par un fluide de pression pour un véhicule tracteur selon la revendication 6, caractérisé en ce que l'appareil de distribution supplémentaire est réuni avec le robinet de frein à ressort accumulateur.

8. Système de freinage mû par un fluide de pression pour un véhicule tracteur selon la revendication 5 ou 7, caractérisé en ce que le robinet de frein à ressort accumulateur (4) est réalisé et disposé de manière qu'à une position (39) de remplissage, il provoque la détente de la chambre de desserrage du cylindre de frein à ressort accumulateur (30) et applique la pression d'alimentation au raccordement de pilotage (8) de l'appareil de distribution (9).

9. Système de freinage mû par un fluide de pression pour un véhicule tracteur selon la revendication 7, caractérisé en ce que le robinet de frein à ressort accumulateur (4) est réalisé et disposé de manière qu'à sa position (38) de freinage de stationnement, il applique la pression d'alimentation à la conduite de pilotage (33) de la soupape relais inverseuse (32) et que, à sa position (39) de remplissage, il provoque la détente de cette conduite de pilotage (33).

10. Système de freinage mû par un fluide de pression pour un véhicule tracteur selon une des revendications précédentes, caractérisé en ce que le robinet de frein à ressort accumulateur (4, 51) présente une position (36) de marche et est disposé de manière qu'à cette position (36) de marche, il applique la pression d'alimentation à la chambre de desserrage du cylindre de frein à ressort accumulateur (30) et au raccordement de pilotage (8) de l'appareil de distribution (9).

11. Système de freinage mû par un fluide de pression pour un véhicule tracteur selon une des revendications précédentes, caractérisé en ce que le robinet de frein à ressort accumulateur (4, 51) présente une zone de réglage, appelée zone de freinage de secours (37), dans laquelle il applique de façon dosable une pression à la chambre de desserrage du cylindre de frein à ressort accumulateur (30) ou détend de façon dosable ce cylindre de frein, en appliquant simultanément la pression d'alimentation au raccordement de pilotage (8) de l'appareil de distribution (9).

12. Système de freinage mû par un fluide de pression pour un véhicule tracteur selon la revendication 10, caractérisé en ce que, dans sa zone de freinage de secours (37), le robinet de frein à ressort accumulateur (4, 51) applique la pression de la chambre de desserrage du cylindre de frein à ressort accumulateur (30) à la conduite de pilotage (33) de la soupape relais inverseuse (32).

13. Système de freinage mû par un fluide de pression pour un véhicule tracteur selon une des revendications 4 à 12, caractérisé en ce que l'appareil de distribution supplémentaire (52) prend automatiquement sa position (53) de freinage de stationnement, appelée également position normale, indépendamment du robinet de frein à ressort accumulateur (51), et peut être amené seulement à sa position (54) de remplissage par une intervention extérieure.

14. Système de freinage mû par un fluide de pression pour un véhicule tracteur selon une des revendications 4 à 13, caractérisé en ce que l'appareil de distribution supplémentaire (52) peut être amené et/ou maintenu à la position (54) de remplissage lorsque le robinet de frein à ressort accumulateur (51) occupe sa position (38) de freinage de stationnement.

Fig. 1

EP 0 234 015 B1

12

Fig. 2